# EUROPEAN PATENT SPECIFICATION

(11) **EP 4 235 290 B1**
(45) Date of publication and mention of the grant of the patent: **04.09.2024**
(21) Application number: 21947367.5
(22) Date of filing: 29.12.2021
(51) Int. Cl.: G02F 1/1675, G02F 1/165, G02F 1/1333, G02F 1/1335

(54) **DISPLAY ELECTRONIC SLURRY PANEL**
ELEKTRONISCHE ABLAGERUNGSANZEIGETAFEL
PANNEAU D'AFFICHAGE ÉLECTRONIQUE À DÉPÔT

(30) Priority: 28.12.2021 CN 202111623500
(43) Date of publication of application: 30.08.2023
(73) Proprietor: Wuxi Vision Peak Technology Co., Ltd., Wuxi, Jiangsu 214028 (CN)
(72) Inventor: BAO, Jin, Wuxi, Jiangsu 214028 (CN); CHEN, Shan, Wuxi, Jiangsu 214028 (CN); YANG, Yang, Wuxi, Jiangsu 214028 (CN); XU, Jun, Wuxi, Jiangsu 214028 (CN)
(74) Representative: Bayramoglu et al.
(86) International application number: PCT/CN2021/142346
(87) International publication number: WO 2023/123014

(56) References cited:
- CN-A- 103 309 114
- CN-A- 108 267 906
- CN-A- 108 957 899
- CN-A- 111 399 304
- CN-A- 111 736 402
- CN-A- 111 736 402
- CN-A- 113 109 976
- CN-A- 113 189 823
- CN-U- 208 367 395
- TW-A- 201 237 527
- US-A1- 2021 327 672

## Description

### TECHNICAL FIELD

The present disclosure relates to the technical field of electronic display, specifically, to a display electronic slurry (DES) panel.

### BACKGROUND

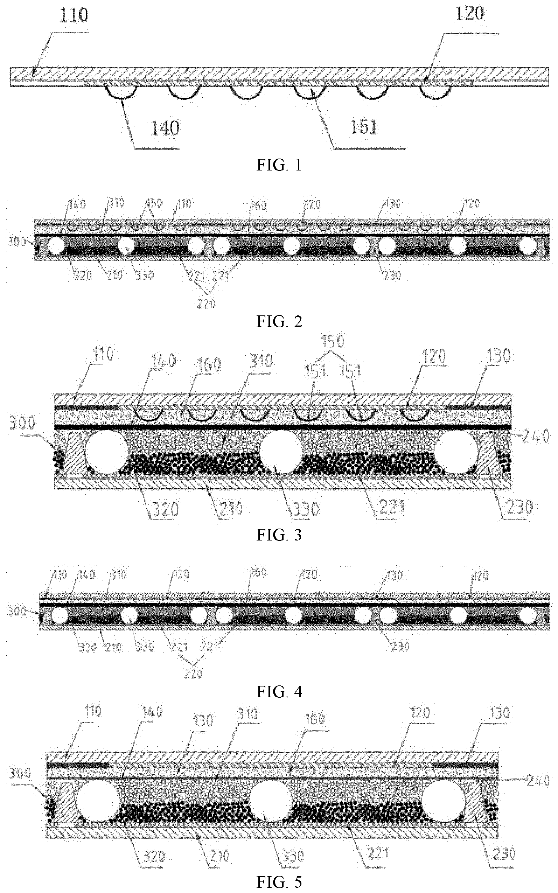

As shown in FIG. 1, an existing DES panel mainly includes a glass substrate, a filter, a reflective layer microstructure, and an indium tin oxide (ITO) layer from top to bottom. The reflective layer microstructure is uniformly arranged on the color filter. Due to different requirements for color saturation and different thicknesses of filters of different colors, the DES panel has a nonuniform electric field, poor pressure resistance, a short refresh life, a fuzzy display effect, and poor color saturation.

Therefore, how to improve the refresh life, reduce diffraction, improve the display effect and the pressure resistance of the panel, and strengthen the uniformity of the electric field has become a technical problem to be resolved by those skilled in the art. CN111736402A discloses a display plasma module. The display plasma module comprises a first substrate and a second substrate, the first substrate and the second substrate are oppositely arranged. A plasma filling area is formed between the first substrate and the second substrate; a pixel electrode layer is arranged on the surface of the first substrate; a light filtering layer is arranged on the surface of the second substrate; a reflecting layer is arranged on the surface of the light filtering layer; the reflecting layer comprises a plurality of reflecting layer microstructures which are arranged at intervals; a supporting structure is arranged in the plasma filling area, the supporting structure makes contact with and is tangent to the surface of the light filtering layer and the surface of the pixel electrode layer, the plasma filling area is filled with plasma particles, the pixel electrode layer is provided with a plasma isolation structure extending in the direction of the light filtering layer, and the height of the plasma isolation structure is not larger than that of the supporting structure.

### SUMMARY

To overcome the above drawbacks in the prior art, the present invention provides a DES panel with a new structure to resolve the problems in related technologies, such as a nonuniform electric field, a short refresh life, a fuzzy display effect, and poor color saturation of the DES panel due to an unsmooth surface of a color filter.

The invention is directed to a DES panel as recited in appended independent claim 1. Other aspects of the invention are recited in the appended dependent claims.

The DES panel with a new structure in the present disclosure has the following advantages:
In the DES panel provided in the present disclosure, one OC layer is disposed between the gaps of the color filters to achieve a smooth surface of the upper substrate. The ITO film is attached to achieve a uniform electric field between the upper and lower substrates of the DES panel, improve a refresh life and a contrast of the DES panel, reduce diffraction, increase color saturation of the DES panel, and improve pressure resistance of the DES panel.

### BRIEF DESCRIPTION OF THE DRAWINGS

The accompanying drawings are provided for further understanding of the present disclosure and constitute part of the specification. The accompanying drawings and the following specific implementations of the present disclosure are intended to explain the present disclosure, rather than to limit the present disclosure.
FIG. 1 is a sectional view of a cover plate of a DES panel in the prior art;
FIG. 2 is a sectional view of a DES panel according to Embodiment 1 of the present disclosure;
FIG. 3 is a partially enlarged sectional view of the DES panel in FIG. 2;
FIG. 4 is a sectional view of a DES panel according to Embodiment 2 of the present disclosure (not constituting a part of the present invention);
FIG. 5 is a partially enlarged sectional view of the DES panel in FIG. 4 (not constituting a part of the present invention);
FIG. 6 is a sectional view of a DES panel according to Embodiment 3 of the present disclosure (not constituting a part of the present invention); and
FIG. 7 is a partially enlarged sectional view of the DES panel in FIG. 6(not constituting a part of the present invention).

Reference numerals: 110: upper substrate; 120: filter layer; 130: OC layer; 140: ITO film; 150: reflective layer; 160: OCA layer; 151: reflective layer microstructure; 210: lower substrate; 220: pixel electrode layer; 221: pixel electrode; 230: electronic slurry barrier weir; 240: electronic slurry flow vent; 300: DES cavity; 310: white electronic slurry particle; 320: black electronic slurry particle; 330: support structure

### DETAILED DESCRIPTION OF THE EMBODIMENTS

To further describe the adopted technical means and the effects of the present disclosure to achieve the intended purpose of the present disclosure, the following describes a DES panel with a new structure in the present disclosure, and specific implementations, structures, features, and effects thereof in detail by referring to the accompanying drawings and preferred embodiments. The described embodiments are a part of, but not all of, the embodiments of the present disclosure. All other embodiments obtained by those of ordinary skill in the art based on the embodiments of the present disclosure without creative efforts shall fall within the protection scope of the present disclosure.

### Embodiment 1

As shown in FIG. 2 and FIG. 3, a DES panel includes a DES module. The DES module includes upper substrate 110 and lower substrate 210 opposite to the upper substrate 110, and DES cavity 300 is formed between the upper substrate 110 and the lower substrate 210. The DES cavity 300 is filled with electronic slurry particles.

Filter layer 120 is disposed on a surface of the upper substrate 110 facing the lower substrate 210, and pixel electrode layer 220 is disposed on a surface of the lower substrate 210 facing the upper substrate 110.

The DES cavity 300 is provided with support structure 330. ITO film 140 is disposed between the support structure 330 and the filter layer 120. A lower surface of the ITO film 140 is in contact with an upper surface of the support structure 330, and a lower surface of the support structure 330 is in contact with an upper surface of the pixel electrode layer 220.

The filter layer 120 includes a plurality of color filters. OC layer 130 is disposed between the gaps of the color filters, and the filter layer 120 is attached to an upper surface of the ITO film 140 by using OCA layer 160. The OCA layer is made of OCA, which is a kind of special optically transparent substrate-free double-sided adhesive.

Specifically, a surface of the filter layer 120 facing the pixel electrode layer 220 is provided with reflective layers 150 at intervals, and the reflective layers 150 are located between the filter layer 120 and the ITO film 140. Preferably, the sheet resistance of the ITO film 140 is 500 Ω, and the thickness is 23 µm. The OC layer 130 is made of liquid silica or liquid polyimide. The ITO film is an n-type semiconductor material with high conductivity, high visible light transmittance, high mechanical hardness, and good chemical stability.

The reflective layers 150 include a plurality of hemispherical reflective layer microstructures 151 disposed at intervals, and the reflective layer microstructures 151 have the same diameter. The reflective layer microstructures 151 are disposed at intervals, which significantly enhances the reflection brightness of white electronic slurry particle 310 of the DES panel, improves contrast, increases color saturation of the DES panel, and achieves an anti-reflection effect.

The support structure 330 includes a support microsphere, and the support microsphere is separately in contact with and tangent to the lower surface of the ITO film 140 and the upper surface of the pixel electrode layer 220. The support microsphere mainly plays a supporting and fixing role to improve the pressure resistance of the DES panel, such that an image will not be blurred or deformed when the DES panel is pressed in a display process, thereby improving the stability of the displayed image.

The pixel electrode layer 220 includes a plurality of pixel electrodes 221 arranged in an array. A gap is formed between two adjacent ones of the pixel electrodes 221. Electronic slurry barrier weir 230 is formed in the gap, and electronic slurry flow vent 240 is formed between the electronic slurry barrier weir 230 and the ITO film 140.

The lower substrate 210 is a TFT glass substrate, and the electronic slurry particles filled in the DES cavity 300 include the white particle 310 and black particle 320.

The electronic slurry barrier weir 230 is a trapezoidal structure extending from the pixel electrode layer 220 to the filter layer 120.

It should be understood that the electronic slurry barrier weir 230 is mainly used to isolate the electronic slurry particles.

In the DES panel provided in the present disclosure, one OC layer is coated between the gaps of the color filters to achieve a smooth surface of the upper substrate, and the ITO film is attached by using the OCA to achieve a uniform electric field between the upper and lower substrates of the DES panel, improve a refresh life and a contrast of the DES panel, reduce diffraction, increase color saturation of the DES panel, and improve the pressure resistance of the DES panel.

It should be noted that the reflective layer microstructures 151 may be arranged in a staggered lattice, or arranged sequentially in horizontal and vertical lattices. The arrangement of the reflective layer microstructure 151 is not limited to the present disclosure.

It should be noted that the reflective layer microstructure 151 is not disposed in the gap between ITO layers 140 corresponding to adjacent color filters.

A manufacturing process of the DES panel with a new structure in the present disclosure is specifically as follows: First, a color filter layer is coated on the upper glass substrate to form color lumps of different colors, and one OC layer is coated between gaps of the color lumps to make the surface of the upper substrate smooth. The reflective layer microstructure 151 may be formed through spin coating, optical etching, thermal curing, or light curing. Finally, the ITO film is attached by using the OCA to complete the manufacturing of the upper substrate. When the DES panel is black and white, it is unnecessary to add the color filter, and the OC layer and the reflective microstructure may be added or not. A display electronic slurry and the support microsphere are disposed between the upper substrate and the lower substrate, and the electronic slurry barrier weir 230 is disposed on the lower substrate.

Preferably, the color lumps are not limited to red, green, and blue (RGB) lumps.

Preferably, the OC layer 130 is evaporated onto the lower surface of the color filter layer, which can enhance the smoothness of the color filter layer, adjust the smoothness of the electric field of the DES panel, and maintain the uniformity of the electric field. Alternatively, the OC layer is not disposed.

In this embodiment, the DES panel with a new structure may specifically be a microcapsule or microcup electronic paper display, a bistable reflective liquid crystal display (LCD), or an LCD.

### Embodiment 2 (not constituting a part of the present invention)

As shown in FIG. 4 and FIG. 5, a DES panel includes a DES module. The DES module includes upper substrate 110 and lower substrate 210 opposite to the upper substrate 110. DES cavity 300 is formed between the upper substrate 110 and the lower substrate 210, and the DES cavity 300 is filled with electronic slurry particles.

Filter layer 120 is disposed on a surface of the upper substrate 110 facing the lower substrate 210, and pixel electrode layer 220 is disposed on a surface of the lower substrate 210 facing the upper substrate 110.

The DES cavity 300 is provided with support structure 330; ITO film 140 is disposed between the support structure 330 and the filter layer 120. A lower surface of the ITO film 140 is in contact with an upper surface of the support structure 330, and a lower surface of the support structure 330 is in contact with an upper surface of the pixel electrode layer 220.

The filter layer 120 includes a plurality of color filters. OC layer 130 is coated between the gaps of the color filters, and then the filter layer 120 is attached to an upper surface of the ITO film 140 by using OCA layer 160.

Specifically, the support structure 330 includes a support microsphere, and the support microsphere is separately in contact with and tangent to the lower surface of the ITO film 140 and the upper surface of the pixel electrode layer 220.

The pixel electrode layer 220 includes a plurality of pixel electrodes 221 arranged in an array. A gap is formed between two adjacent ones of the pixel electrodes 221. Electronic slurry barrier weir 230 is formed in the gap, and electronic slurry flow vent 240 is formed between the electronic slurry barrier weir 230 and the ITO film 140.

The lower substrate 210 is a TFT glass substrate, and the electronic slurry particles filled in the DES cavity 300 include white particles 310 and black particles 320.

The electronic slurry barrier weir 230 is a trapezoidal structure extending from the pixel electrode layer 220 to the filter layer 120.

### Embodiment 3 (not constituting a part of the present invention)

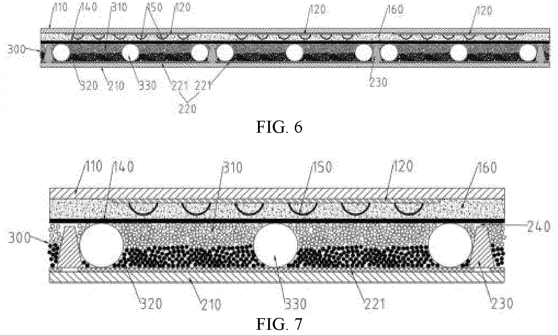

As a variant of Embodiment 1, a color display screen is identical to the DES panel of Embodiment 1 except that no OC layer is disposed between gaps of color filters, as shown in FIG. 6 and FIG. 7.

The above embodiments are only preferred ones of the present disclosure and are not intended to limit the present disclosure in any form. Although the present disclosure has been disclosed by the foregoing embodiments, these embodiments are not intended to limit the present disclosure. Any person skilled in the art may make some changes or modifications to implement equivalent embodiments with equivalent changes by using the technical contents disclosed above without departing from the scope of the technical solution of the present disclosure. Any simple modification, equivalent change, and modification made to the foregoing embodiments according to the technical essence of the present disclosure without departing from the content of the technical solution of the present disclosure shall fall within the scope of the technical solution of the present disclosure.

## Claims

1. A display electronic slurry, DES, panel, comprising a DES module, wherein the DES module comprises an upper substrate (110) and a lower substrate (210) opposite to the upper substrate (110), a DES cavity (300) is formed between the upper substrate (110) and the lower substrate (210), and the DES cavity (300) is filled with electronic slurry particles;
a filter layer (120) is disposed on a surface of the upper substrate (110) facing the lower substrate (210), and a pixel electrode layer (220) is disposed on a surface of the lower substrate (210) facing the upper substrate (110);
the DES cavity (300) is provided with a support structure (330), an indium tin oxide, ITO, film (140) is disposed between the support structure (330) and the filter layer (120), a lower surface of the ITO film (140) is in contact with an upper surface of the support structure (330), and a lower surface of the support structure (330) is in contact with an upper surface of the pixel electrode layer (220);
a surface of the filter layer (120) facing the pixel electrode layer (220) is provided with reflective layers (150) at intervals, the reflective layers (150) being located between the filter layer (120) and the ITO film (140) and the reflective layers (150) comprising a plurality of hemispherical reflective layer microstructures (151) disposed at intervals; and
the filter layer (120) comprises a plurality of color filters, **characterized in that** an optical coating layer (130) made of liquid silica or liquid polyimide is disposed between gaps of the color filters, and the filter layer (120) is attached to an upper surface of the ITO film (140) by using an optically clear adhesive layer (160)

2. The DES panel according to claim 1, wherein the reflective layer microstructures (151) have a same diameter, or at least two of the reflective layer microstructures (151) have different diameters.

3. The DES panel according to claim 1, wherein the support structure (330) comprises a support microsphere, wherein the support microsphere is separately in contact with and tangent to the lower surface of the ITO film (140) and the upper surface of the pixel electrode layer (220).

4. The DES panel according to claim 1, wherein the pixel electrode layer (220) comprises a plurality of pixel electrodes (221) arranged in an array, wherein a gap is formed between two adjacent ones of the pixel electrodes (221), an electronic slurry barrier weir (230) is formed in the gap, and an electronic slurry flow vent (240) is formed between the electronic slurry barrier weir (230) and the ITO film (140).

5. The DES panel according to claim 1, wherein the lower substrate (210) is a thin film transistor glass substrate, and the electronic slurry particles filled in the DES cavity (300) comprise white particles (310) and black particles (320).

6. The DES panel according to claim 1, wherein the electronic slurry barrier weir (230) is a trapezoidal structure extending from the pixel electrode layer (220) to the filter layer (120).

## Patentansprüche

1. Display-Electronic-Slurry-Platte, DES-Platte, die ein DES-Modul umfasst, wobei das DES-Modul ein oberes Substrat (110) und ein unteres Substrat (210), dem oberen Substrat (110) entgegengesetzt, umfasst, ein DES-Hohlraum (300) zwischen dem oberen Substrat (110) und dem unteren Substrat (210) gebildet ist, und der DES-Hohlraum (300) mit elektronischen Slurry-Teilchen gefüllt ist;
eine Filterschicht (120) auf einer Oberfläche des oberen Substrats (110), dem unteren Substrat (210) zugewandt, angeordnet ist, und eine Pixelelektrodenschicht (220) auf einer Oberfläche des unteren Substrats (210), dem oberen Substrat (110) zugewandt, angeordnet ist;
der DES-Hohlraum (300) mit einer Stützstruktur (330) versehen ist, ein Indium-Zinnoxid-Film, ITO-Film (140) zwischen der Stützstruktur (330) und der Filterschicht (120) angeordnet ist, eine untere Oberfläche des ITO-Films (140) mit einer oberen Oberfläche der Stützstruktur (330) in Kontakt steht, und eine untere Oberfläche der Stützstruktur (330) mit einer oberen Oberfläche der Pixelelektrodenschicht (220) in Kontakt steht;
eine Oberfläche der Filterschicht (120), die der Pixelelektrodenschicht (220) zugewandt ist, in Abständen mit reflektierenden Schichten (150) versehen ist, die reflektierenden Schichten (150) zwischen der Filterschicht (120) und dem ITO-Film (140) liegen und die reflektierenden Schichten (150) eine Vielzahl halbkugelförmiger reflektierender Mikrostrukturen (151) mit reflektierender Schicht umfassen, die in Abständen angeordnet sind; und
die Filterschicht (120) eine Vielzahl von Farbfiltern umfasst, **dadurch gekennzeichnet ist, dass** eine optische Beschichtungsschicht (130), die aus flüssigem Siliziumdioxid oder flüssigem Polyimid hergestellt ist, zwischen den Lücken der Farbfilter angeordnet ist, und die Filterschicht (120) unter Verwendung einer optisch klaren Klebeschicht (160) an einer oberen Oberfläche des ITO-Films (140) angebracht ist.

2. DES-Platte nach Anspruch 1, wobei die Mikrostrukturen (151) mit reflektierender Schicht den gleichen Durchmesser aufweisen oder mindestens zwei der Mikrostrukturen (151) mit reflektierender Schicht unterschiedliche Durchmesser aufweisen.

3. DES-Platte nach Anspruch 1, wobei die Stützstruktur (330) eine Stützmikrosphäre umfasst, wobei die Stützmikrosphäre separat von und tangential zu der unteren Oberfläche des ITO-Films (140) und der oberen Oberfläche der Pixelelektrodenschicht (220) in Kontakt steht.

4. DES-Platte nach Anspruch 1, wobei die Pixelelektrodenschicht (220) eine Vielzahl von Pixelelektroden (221) umfasst, die in einem Array eingerichtet sind, wobei zwischen zwei angrenzenden der Pixelelektroden (221) eine Lücke gebildet ist, ein elektronisches Slurry-Barrierenwehr (230) in der Lücke gebildet ist, und eine elektronische Shirrystromentlüftung (240) zwischen dem elektronischen Slurry-Barrierenwehr (230) und dem ITO-Film (140) gebildet ist.

5. DES-Panel nach Anspruch 1, wobei das untere Substrat (210) ein Dünnschichttransistor-Glassubstrat ist und die elektronischen Slurry-Teilchen, die in den DES-Hohlraum (300) gefüllt sind, weiße Teilchen (310) und schwarze Teilchen (320) umfassen.

6. DES-Panel nach Anspruch 1, wobei das elektronische Slurry-Barrierenwehr (230) eine trapezförmige Struktur ist, die sich von der Pixelelektrodenschicht (220) zu der Filterschicht (120) erstreckt.

## Revendications

1. Panneau d'affichage à suspension électronique (DES), comprenant un module DES, dans lequel le module DES comprend un substrat supérieur (110) et un substrat inférieur (210) opposé au substrat supérieur (110), une cavité DES (300) est formée entre le substrat supérieur (110) et le substrat inférieur (210), et la cavité DES (300) est remplie de particules de suspension électronique ;
une couche de filtre (120) est disposée sur une surface du substrat supérieur (110) en regard du substrat inférieur (210), et une couche d'électrodes de pixels (220) est disposée sur une surface du substrat inférieur (210) en regard au substrat supérieur (110) ;
la cavité DES (300) est pourvue d'une structure support (330), un film (140) d'oxyde d'indium-étain, ITO, est disposé entre la structure support (330) et la couche de filtre (120), une surface inférieure du film d'ITO (140) est en contact avec une surface supérieure de la structure support (330), et une surface inférieure de la structure support (330) est en contact avec une surface supérieure de la couche d'électrodes de pixels (220) ;
une surface de la couche de filtre (120) en regard de la couche d'électrodes de pixels (220) est pourvue de couches réfléchissantes (150) à des intervalles, les couches réfléchissantes (150) sont situées entre la couche de filtre (120) et le film d'ITO (140) et les couches réfléchissantes (150) comprenant une pluralité de microstructures hémisphériques de couche réfléchissante (151) disposées à des intervalles ; et
la couche de filtre (120) comprend une pluralité de filtres de couleur, **caractérisé en ce qu'**une couche de revêtement optique (130) en silice liquide ou en polyimide liquide est disposée entre des espaces des filtres de couleur, et la couche de filtre (120) est rapportée à une surface supérieure du film ITO (140) en utilisant une couche d'adhésif optiquement transparent (160).

2. Panneau DES selon la revendication 1, dans lequel les microstructures de couche réfléchissante (151) ont le même diamètre, ou au moins deux des microstructures de couche réfléchissante (151) ont des diamètres différents.

3. Panneau DES selon la revendication 1, dans lequel la structure support (330) comprend une microsphère de support, dans lequel la microsphère de support est séparément en contact avec et tangente à la surface inférieure du film d'ITO (140) et la surface supérieure de la couche d'électrodes de pixels (220).

4. Panneau DES selon la revendication 1, dans lequel la couche d'électrodes de pixels (220) comprend une pluralité d'électrodes de pixels (221) agencées en réseau, dans lequel un espace est formé entre deux électrodes adjacentes parmi les électrodes de pixels (221), un déversoir de barrière de suspension électronique (230) est formé dans l'espace, et un évent d'écoulement de suspension électronique (240) est formé entre le déversoir de barrière de suspension électronique (230) et le film d'ITO (140).

5. Panneau DES selon la revendication 1, dans lequel le substrat inférieur (210) est un substrat de verre de transistor en couches minces, et les particules de suspension électronique remplissant la cavité DES (300) comprennent des particules blanches (310) et des particules noires (320).

6. Panneau DES selon la revendication 1, dans lequel le déversoir de barrière de suspension électronique (230) est une structure trapézoïdale s'étendant de la couche d'électrodes de pixels (220) jusqu'à la couche de filtre (120).
